# EUROPÄISCHE PATENTANMELDUNG

(11) **EP 2 685 254 A2**
(43) Veröffentlichungstag der Anmeldung: **15.01.2014**
(21) Anmeldenummer: 13170225.0
(22) Anmeldetag: 03.06.2013
(51) Int. Cl.: G01N 29/24

(54) **Drahtloser Oberflächenwellensensor**

(30) Priorität: 11.07.2012 AT 500632012
(71) Anmelder: CTR Carinthian Tech Research AG, 9524 Villach/St. Magdalen (AT)
(72) Erfinder: Binder, Alfred, 9523 Landskron (AT); Bruckner, Gudrun, 9241 Wernberg (AT); Fachberger, René, 4600 Wels (AT)
(74) Vertreter: Wirnsberger, Gernot

(57) **Zusammenfassung**

Die Erfindung betrifft eine Sensoranordnung (1), mit der durch Funk zumindest eine Messgröße messbar ist, umfassend ein Substrat (2) mit darauf angebrachten Oberflächenstrukturen (3), wobei die Oberflächenstrukturen (3) zumindest eine Einkoppeleinheit (4) zur Generierung einer Oberflächenwelle im bzw. am Substrat (2) durch Einkoppeln eines Funksignals und Umwandlung in eine Oberflächenwelle sowie zumindest einen Reflektor (5, 6, 7, 8, 9, 10) aufweisen, welcher die Oberflächenwelle zur Einkoppeleinheit (4) reflektiert. Um die Sensoranordnung (1) bei hohen Temperaturen und Drücken einsetzen zu können, ist gemäß der Erfindung das Substrat (2) zwischen mehreren Anlagen (11, 12) mit punktförmigen Anlagebereichen gelagert.

## Beschreibung

Die Erfindung betrifft eine Sensoranordnung, mit der durch Funk zumindest eine Messgröße messbar ist, umfassend ein Substrat mit darauf angebrachten Oberflächenstrukturen, wobei die Oberflächenstrukturen zumindest eine Einkoppeleinheit zur Generierung einer Oberflächenwelle im bzw. am Substrat durch Einkoppeln eines Funksignals und Umwandlung in eine Oberflächenwelle sowie zumindest einen Reflektor aufweisen, welcher die Oberflächenwelle zur Einkoppeleinheit reflektiert.

Bei vielen Produktionsprozessen ist es erforderlich, zumindest eine Messgröße kontinuierlich oder diskontinuierlich zu messen und auf Basis des Messergebnisses den Prozess zu steuern bzw. zu regeln. Während dies oftmals mit drahtgebundenen Sensorelementen erfolgen kann, gibt es auch Konstellationen, in welchen ein Sensorsignal drahtlos zu einer Auswerteeinheit übertragen werden muss. Beispiele hierfür sind im Betrieb bewegte oder rotierende Teile, an welchen eine Messgröße abzunehmen ist, beispielsweise der Innendruck eines Reifens. Ähnliche Konstellationen treten auf, wenn äußere Rahmenbedingungen wie Hochvakuum oder hohe Spannungen ausschließlich eine drahtlose Signalübertragung ermöglichen. Auch bei weniger komplexen Produktionsprozessen wie der großtechnischen Herstellung von Backwaren, die sich entlang einer Produktionslinie bewegen und beim Backen in bestimmten Temperaturintervallen gehalten werden müssen, kann sich diese Problematik ergeben.

Eine drahtlose Messung einer Messgröße wie Temperatur und/oder Druck ist mit passiven Sensoren möglich, welche drahtlos ein Messsignal durch Funk an eine Auswerteeinheit übermitteln. Derartige Sensoren erlauben es, den Sensor an sich direkt an der interessierenden Stelle zur Ermittlung der Messgröße anzubringen, wobei der Sensor je nach Produktionsprozess mitbewegt und/oder mitrotiert werden kann. Die Bewegung des Sensors ist unerheblich, da die Signale über Funk an eine stationäre Auswerteeinheit übermittelt werden.

Als passive Sensoren haben sich in den letzten Jahren insbesondere Surface-Acoustic-Wave-Sensoren (SAW-Sensoren) etabliert. SAW-Sensoren umfassen ein Substrat, in der Regel eine in einer bestimmten kristallografischen Richtung geschnittene Scheibe aus einem Kristall wie Quarz, und eine darauf angebrachte Einkoppeleinheit, wobei die Einkoppeleinheit mit einer Antenne verbunden ist. Des Weiteren sind der Einkoppeleinheit gegenüberliegende Reflektoren vorgesehen. Durch Übermittlung eines Funksignals an die Antenne wird in der Einkoppeleinheit aufgrund eines piezoelektrischen Effektes eine Oberflächenwelle generiert, die sich entlang der Scheibe bzw. des geschnittenen Kristalls fortsetzt. Durch die Reflektoren wird diese Oberflächenwelle wieder zur Einkoppeleinheit reflektiert und dort nach Umwandlung über die Antenne ein Funksignal abgestrahlt. Das abgestrahlte Funksignal ist deutlich schwächer als das einlangende Signal, aber ausreichend, um mit einem guten Signal-zu-Rausch-Verhältnis empfangen zu werden. Da sich die Fortpflanzung der Oberflächenwelle und damit das abgestrahlte bzw. empfangene Signal beispielsweise mit der Temperatur der Scheibe oder dem Druck, dem diese unterworfen ist, ändert, kann über das empfangene Signal eine Messgröße wie Temperatur oder Druck bestimmt werden.

Aus dem Stand der Technik sind mehrere SAW-Sensoren bekannt geworden, mit denen es teilweise möglich ist, Temperatur und/oder Druck zu messen. Diesen Sensoren haftet jedoch der Nachteil an, dass diese insbesondere bei hohen Temperaturen keine gewünschte Langlebigkeit aufweisen. Auch bei höheren Druckbelastungen kann es zu Problemen kommen.

Aufgabe der Erfindung ist es, eine Sensoranordnung der eingangs genannten Art anzugeben, bei der die vorstehend genannten Nachteile beseitigt oder zumindest verringert sind.

Die Aufgabe wird erfindungsgemäß gelöst, wenn bei einer Sensoranordnung der eingangs genannten Art das Substrat zwischen mehreren Anlagen mit punktförmigen Anlagebereichen gelagert ist.

Ein mit der Erfindung erzielter Vorteil ist insbesondere darin zu sehen, dass durch die Lagerung zwischen mehreren Anlagen mit punktförmigen Anlagebereichen zur Befestigung des Substrates bzw. der Scheibe aus einem Kristall keine Klebeverbindung mehr erforderlich ist. Vielmehr kann das Substrat ausschließlich durch die Anlagen gehalten sein. Dies erlaubt es, zur Befestigung des Substrates vollständig auf einen Kleber zu verzichten bzw. die Lagerung des Substrates klebstofffrei auszuführen, sodass die Sensoranordnung insbesondere auch bei hohen Temperaturen über lange Zeit einsetzbar ist. Darüber hinaus tritt aufgrund einer klebefreien Verbindung kein kleberbedingter Sensordrift auf. Die punktförmigen Anlagebereiche erlauben es zudem, eine Druckmessung unter gleichzeitiger Berücksichtigung einer Temperaturkompensation durchzuführen.

Für eine Signalübertragung zum Substrat und eine Umwandlung in eine Oberflächenwelle sowie die Rückumwandlung ist es zweckmäßig, dass das Substrat aus einem piezoelektrischen Kristall gebildet ist. Grundsätzlich kommen beliebige piezoelektrische Materialien infrage, beispielsweise Quarz, der insbesondere in einer temperaturunabhängigen kristallografischen Richtung geschnitten ist, um die Scheibe bzw. das Substrat unabhängig von Temperatureinflüssen für eine Druckmessung auszulegen. Besonders bewährt hat sich in diesem Zusammenhang Lithiumniobat (LiNbO₃) LiNbO₃ hat zwar keine bevorzugte kristallografische Richtung, in welcher eine Temperaturunabhängigkeit gegeben ist, weist allerdings den Vorteil auf, dass innerhalb des vergleichsweise breiten und international einheitlichen ISM-Bandes von 2400 bis 2480 MHz gearbeitet werden kann. Im Gegensatz dazu ist bei Verwendung von Quarz ein zulassungsfreier Betrieb in einem ISM-Band auf den Bereich von 433,05 bis 433,97 MHz beschränkt. Ein höherfrequentes Band eliminiert Bandbreitenlimitierungen, die sich bei Quarz ergeben. Auch die Einkoppelung und damit die Signalgüte ist für LiNbO₃ besser, weil die Auflösung der Verzögerung des Umlaufes der Oberflächenwelle invers proportional zur Bandbreite ist, die für LiNbO₃ mit 80 MHz deutlich größer ist.

Ohne Änderung des Konzeptes der Erfindung können jedoch auch andere geeignete Kristallsubstrate eingesetzt werden. Als Materialien hierfür eignen sich z. B. Langasit (La₃Ga₅SiO₁₄) oder auch Schichtsubstrate wie Aluminiumnitrid auf Saphir (AlN/Al₂O₃).

Die Einkoppeleinheit ist bevorzugt ein Interdigitalwandler, der kammartig ineinander eingreifende Strukturen umfasst. Der Interdigitalwandler ist über sogenannte Bonds, in der Regel durch Reibschweißen angebrachte Aluminiumdrähte, mit einer Antenne der Sensoranordnung verbunden.

Es ist von Vorteil, wenn mehrere Reflektoren zur Messung von Temperatur und/oder Druck und/oder zur Identifikation der Sensoranordnung vorgesehen sind. Es können dann mehrere Messgrößen wie Temperatur und Druck gemessen werden. Gleichzeitig ist eine Identifikation der Sensoranordnung möglich, was insbesondere dann von Interesse ist, wenn mehrere Sensoranordnungen zur Prozessüberwachung eingesetzt werden und die Sensoranordnungen im selben Frequenzband arbeiten.

Für die Messung des Druckes sind grundsätzlich drei Reflektoren vorgesehen, die so angeordnet sind, dass die mechanischen Spannungszustände im Substrat zwischen einem endständigen und einem mittleren Reflektor durch die Auflagepunkte beeinflusst werden, während das Substrat im Bereich zwischen einem gegenüberliegenden endständigen Reflektor und dem mittleren Reflektor durch die übertragenen Druckkräfte nicht beeinflusst wird. Dieser unbeeinflusste Bereich kann somit zur Kompensation des Temperatureinflusses genutzt werden. Dazu können die Reflektoren prinzipiell beliebige Abstände voneinander aufweisen, sind jedoch vorteilhafterweise so angeordnet, dass ein Abstand eines ersten Reflektors zu einem zweiten, mittleren Reflektor einem Abstand vom zweiten Reflektor zu einem dritten Reflektor entspricht. Somit sind die Reflektoren grundsätzlich auf einer gemeinsamen linearen Spur bzw. einer Geraden angeordnet, wobei ein Abstand des zur Einkoppeleinheit proximalen Reflektors zu einem mittleren Reflektor dem Abstand des mittleren Reflektors zu einem zur Einkoppeleinheit distalen Reflektor entspricht. Ebenso ist es prinzipiell möglich, wahlweise den druckbelasteten Bereich oder den spannungsfreien näher zur Einkoppeleinheit anzuordnen. Aus praktischen Erwägungen ist es allerdings häufig vorteilhaft, den spannungsbelasteten Bereich zur Druckmessung mittig auf dem Substrat und somit in proximaler Position zur Einkoppeleinheit anzuordnen; der nicht belastete Teil zur Temperaturkompensation ist dann im verbleibenden distalen Bereich angeordnet.

In einer Weiterbildung dieser Anordnung ist es möglich, durch Einführung zumindest eines weiteren Reflektors im Bereich des nicht belasteten Bereiches bzw. Reflektorpaares zusätzlich zur Druckmessung eine absolute Temperaturmessung zu ermöglichen. Bei der zuvor erwähnten mittigen Anordnung zur Druckmessung befindet sich dieser zusätzliche Reflektor zwischen dem mittleren und dem zur Einkoppeleinheit distalen (End-)Reflektor der Druckmessanordnung, also zwischen den beiden von der Einkoppeleinheit am weitesten entfernten Reflektoren zur Messung des Druckes.

Die einzelnen Reflektoren können auf mehreren Spuren am Substrat bzw. der Scheibe angeordnet sein. Dies bringt grundsätzlich den Vorteil, dass eine sehr genaue Temperaturmessung erreicht werden kann. Von besonderem Vorteil ist es jedoch, wenn die Einkoppeleinheit und die Reflektoren auf einer Geraden angeordnet sind. Sind die Einkoppeleinheit und die Reflektoren zur Messung von Druck und Temperatur in einer Linie angeordnet, so kann das eingekoppelte Signal und damit die Energie der Oberflächenwelle auf eine einzige Strecke konzentriert werden. Dadurch werden gute Signal-zu-Rausch-Verhältnisse erreicht.

Üblicherweise ist für Druckmessungen zumindest eine Membran vorgesehen, die mit zumindest einer Anlage in Verbindung steht oder mit dieser integral verbunden ist. Dadurch lässt sich ein von außen auf die Membran einwirkender Druck auf die zumindest eine Anlage und damit auch auf das Substrat übertragen. Anders ausgedrückt verändert sich der durch die zumindest eine Anlage übertragene Druck, wenn sich der Druck an der mit der Anlage in Verbindung stehenden Membran ändert. Somit können der Druck bzw. Druckänderungen gemessen werden. Hierfür ist es zweckmäßig, dass zumindest eine Membran einen außenseitigen Teilbereich der Sensoranordnung bildet, damit das zu messende umgebende Medium, insbesondere eine Flüssigkeit oder ein Gas, direkt an der Membran anliegen kann.

Die punktförmigen Anlagen können grundsätzlich beliebig ausgebildet sein. Möglich sind Ausführungsformen, in denen die Anlagen, die sich oberhalb und unterhalb des Substrates als Anschlag bzw. Auflager befinden, als Stifte ausgebildet sind, die sich zum Substrat hin verjüngen und so jeweils eine punktförmige Anlage bilden. Besonders günstig ist es, wenn zumindest einzelne, vorzugsweise alle der punktförmigen Anlagen an den Anlagebereichen am Substrat als Kugelsegmente ausgebildet sind. Die einzelnen Anlagen können in dieser Variante beispielsweise jeweils als Kugeln ausgebildet sein, zwischen welchen das Substrat gehalten ist. Zumindest eine der Kugeln steht dann vorzugsweise mit einer Membran in Verbindung, wobei die Membran unterhalb oder oberhalb des Substrates angeordnet sein kann. Wie erwähnt lassen sich dann durch ein äußeres Medium über die Membran und die Kugel am Substrat Spannungen induzieren, welche Basis für eine Druckmessung sind. Zur Bildung der punktförmigen Anlagen ist es allerdings bereits ausreichend, dass bloß in den Anlagebereichen Kugelsegmente vorliegen. Dies kann in vorteilhafter Weise genutzt werden, um einzelne Kugelsegmente integral mit einer Membran auszubilden. Dadurch kann eine Anzahl von Komponenten für die Sensoranordnung insgesamt reduziert werden. Weniger Bauteile bedeuten aber auch weniger Kosten.

Wenn mehrere Kugelsegmente vorgesehen sind, können die Anlagen drei erste Kugelsegmente und ein weiteres zweites Kugelsegment umfassen, wobei das Substrat zwischen den ersten Kugelsegmenten und dem zweiten Kugelsegment gelagert ist. Dabei können die ersten Kugelsegmente und/oder das zweite Kugelsegment auf einer Membran angeordnet sein, wobei insbesondere die bereits erwähnte integrale Ausbildung zweckmäßig ist. So können in einem oberen Bereich drei erste Kugelsegmente vorgesehen sein, welche in einem Kreis oder einem Dreieck angeordnet sind. Unterhalb des Substrates ist es ausreichend, ein weiteres zweites Kugelsegment vorzusehen, welches für die Lagerung des Substrates als Auflager dient. Das zweite Kugelsegment ist in der Regel größer als die einzelnen ersten Kugelsegmente ausgebildet. Sofern anstelle der Kugelsegmente individuelle Kugeln vorgesehen sind, kann eine analoge Anordnung getroffen werden. Es versteht sich, dass diese Anordnung auch umkehrbar ist, also drei Kugelsegmente bzw. Kugeln unterhalb des Substrates als Auflager dienen können und ein einzelnes Kugelsegment bzw. eine einzelne Kugel als Gegenlager oberhalb des Substrates vorgesehen ist. Dabei sind die Anlagen in allen Fällen zentrumsnah angeordnet, sodass bei einer plättchenförmigen Ausbildung des Substrates die Anlagen entlang der Längsachse des Substrates nicht mehr als 40 % der Gesamtlänge vom Zentrum beabstandet sind.

Einer hohen Verschleißbeständigkeit wegen, aber auch aus Gründen der Temperaturstabilität sind die Anlagen bevorzugt aus einem Stahl gebildet. Stahl für die Anlagen bringt auch den Vorteil mit sich, dass die Anlagen auf einfache Weise aus einem kostengünstigen Material gebildet werden können, und zwar auch dann, wenn integral mit einer Membran ausgebildete Kugelsegmente vorgesehen sind. Günstig kann auch der Einsatz eines Materials sein, das einen ähnlichen Ausdehnungskoeffizienten wie das Material des Substrates aufweist. Wird LiNbO₃ eingesetzt, kann beispielsweise statt einem Edelstahl auch Nickel für die Anlagen ein brauchbares Material darstellen.

Weitere Merkmale, Vorteile und Wirkungen der Erfindung ergeben sich aus den nachfolgend dargestellten Ausführungsbeispielen. In den Figuren, auf welche dabei Bezug genommen wird, zeigen:
Fig. 1 eine Sensoranordnung in einem schematischen Querschnitt;
Fig. 2 eine Darstellung der Spannungen in einem Substrat einer Sensoranordnung gemäß Fig. 1;
Fig. 3 Verteilung von Längsspannungen (Sₓₓ-Spannungen) entlang verschiedener Spuren bzw. parallel zur Längsachse in einem Substrat gemäß Fig. 2;
Fig. 4 Verteilung von Querspannungen (S_{yy}-Spannungen) entlang verschiedener Spuren bzw. parallel zur Längsachse in einem Substrat gemäß Fig. 2;
Fig. 5 eine schematische Darstellung eines Chips mit einer Einkoppeleinheit und mehreren in einer Spur angeordneten Reflektoren;
Fig. 6 einen Ausschnitt durch eine alternative Sensoranordnung;
Fig. 7 bis 9 schematische Anordnungen verschiedener Lagerungen des Substrates.

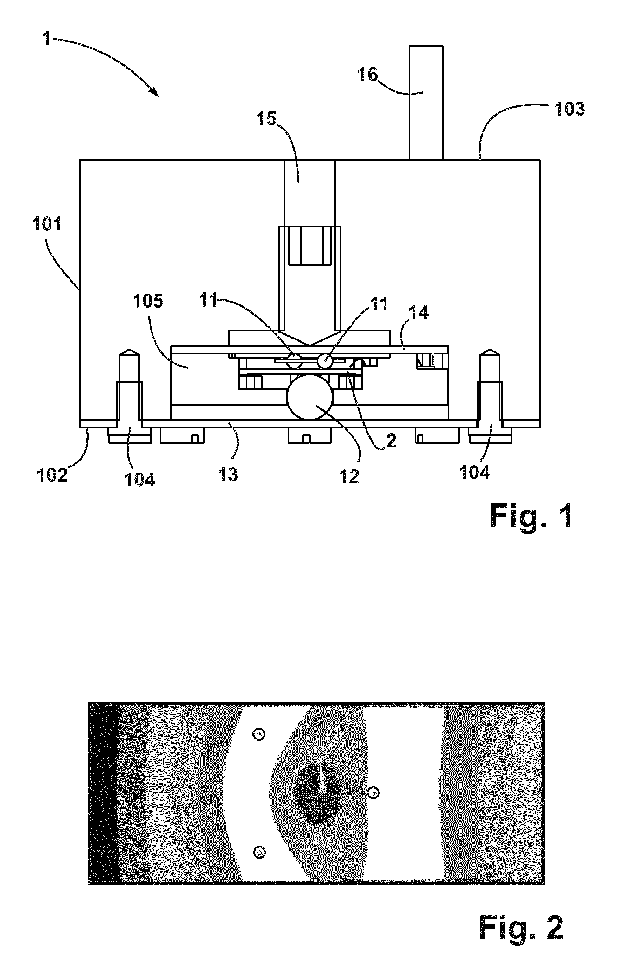

In Fig. 1 ist eine Sensoranordnung 1 dargestellt, die ein Oberteil 101 sowie ein Unterteil 102 aufweist, die zusammen ein Gehäuse 103 bilden und durch Schrauben 104 oder gegebenenfalls andere Befestigungsmittel miteinander verbunden sind. Im Inneren des Gehäuses 103 der Sensoranordnung 1 ist ein Sensor angeordnet. Der Sensor umfasst eine erste bzw. untere Membran 13, welche das Gehäuse 103 außenseitig bzw. im Ausführungsbeispiel nach unten hin abschließt. Auf der Membran 13 ist eine Kugel als untere Anlage 12 für ein darauf befindliches Substrat 2 gelagert. Als Gegenlager dienen mehrere obere Anlagen 11, die ebenfalls als Kugeln ausgebildet sind und im Querschnitt nur teilweise ersichtlich sind. Die oberen Anlagen 11 sind etwa rotationssymmetrisch um die untere Anlage 12 angeordnet. Zwischen den oberen Anlagen 11 und der unteren Anlage 12 ist das Substrat 2 gehalten. Das Substrat 2 ist des Weiteren in eine umgebende Peripherie 105 eingebettet, gegenüber welcher das Substrat 2 zwar beabstandet ist, allerdings nur ein geringes Spiel aufweist. Oberhalb der drei oberen Anlagen 11 ist eine zweite bzw. obere Membran 14 angeordnet, welche die in diesem Ausführungsbeispiel als Kugeln ausgebildeten oberen Anlagen 11 durch Druck in Position hält. Die zweite Membran 14 kann mit einer in Fig. 1 dargestellten Stellschraube 15 in Verbindung stehen, damit die zweite Membran 14 in gewünschter Weise vorgespannt werden kann, was allerdings nicht zwingend erforderlich ist. Die oberen Anlagen 11 sowie die untere Anlage 12 sind bevorzugt aus einem Stahl gebildet, was auch für die erste Membran 13 und die zweite Membran 14 gilt. Das Substrat 2 besteht bevorzugt aus einem dünnen, rechteckigen Plättchen aus LiNbO₃.

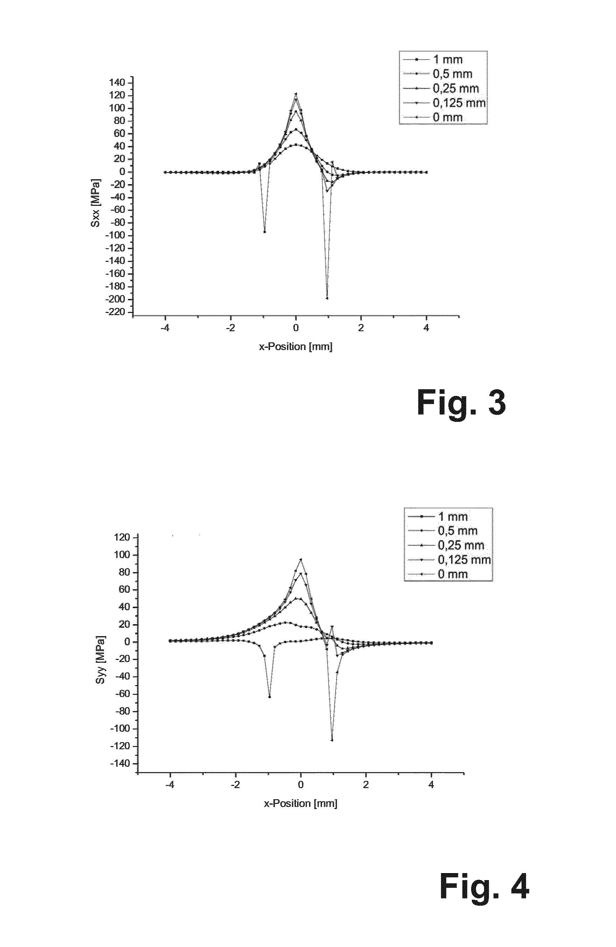

In Fig. 2 sind Spannungszustände im Substrat 2 bildlich dargestellt, wobei die Positionen der oberen Anlagen 11 sowie der unteren Anlage 12 ebenfalls eingezeichnet sind. In Zusammenschau mit Fig. 3 und 4 ergibt sich, dass bei der Sensoranordnung 1 gemäß Fig. 1 die maximalen Längsspannungen im Zentrum zwischen den ersten Auflagepunkten (x = 0 und y = 0) gegeben sind (Fig. 3). Gleichzeitig ist in diesem Punkt allerdings auch ein Maximum der Querspannungen gegeben, was eine latente Unsicherheit in die Messung einbringt. Aus diesem Grund ist es vorteilhaft, die Messposition in Längsrichtung in der Mitte zwischen den Auflagepunkten, d. h. bei x = 0, in Querrichtung aber außerhalb dieses Zentrums, beispielsweise bei y = 25 % des seitlichen Abstandes zwischen der Längsachse X und einem der seitlichen ersten Auflagepunkte, anzuordnen, um so den Einfluss der Querspannungen zu minimieren. Die Querspannungen nehmen vergleichsweise nach außen hin stärker ab (Fig. 4).

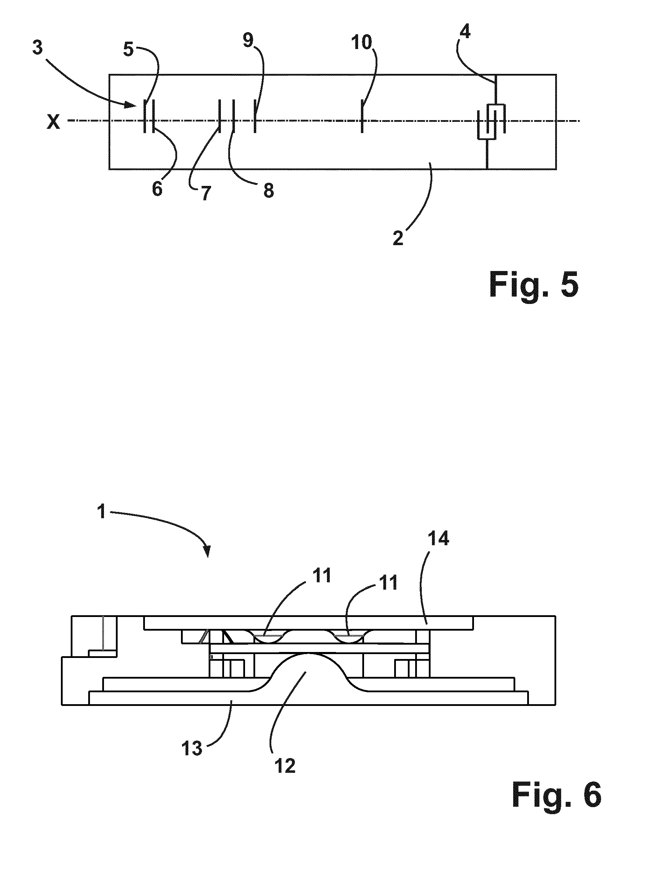

In Fig. 5 ist ein Chip einer Sensoranordnung 1 dargestellt, bei welcher die vorstehenden Überlegungen betreffend die Spannungen berücksichtigt sind. Das Substrat 2 bzw. der Chip ist aus LiNbO₃ gebildet. Ganz rechts am Chip befindet sich eine Einkoppeleinheit 4, die ein Interdigitalwandler ist und zusammen mit Reflektoren 5, 6, 7, 8, 9, 10 Oberflächenstrukturen 3 am Substrat 2 bildet. Die Einkoppeleinheit 4 bzw. der Interdigitalwandler ist über sogenannte Bonds mit der Antenne 16 verbunden. Hierfür werden die Bonds, in der Regel dünne Drähtchen aus Aluminium oder einer Aluminiumlegierung, durch Reibschweißen an den außenseitigen Enden der kammartigen Strukturen des Interdigitalwandlers angebracht. Eine Führung der Bonds nach außen erfolgt durch Glasauslässe, sodass das Substrat 2 in der Sensoranordnung 1 gasdicht abgeschlossen ist. Zu den Oberflächenstrukturen 3 zählen des Weiteren die Reflektoren 5, 6, 7, 8, 9, 10, die zusammen mit der Einkoppeleinheit 4 entlang einer Geraden, somit in einer Spur, angeordnet sind, deren Mittelachse beabstandet zur Längsachse X des Substrates 2 verläuft. Ausgehend in Fig. 5 von links nach rechts sind die Reflektoren 5, 9, 10 primär für eine Druckmessung vorgesehen. Eine Druckmessung erfolgt durch eine differenzielle Betrachtung der reflektierten Oberflächenwellen im durch die Anlagen 11, 12 belasteten Bereich zwischen den Reflektoren 9, 10 einerseits und im Bereich des freien Endes bzw. des Reflektors 5 andererseits. Eine Temperaturmessung erfolgt mit den Reflektoren 5, 6, 9. Da der Einfluss von Spannungen am freien Ende des Substrates 2 minimal ist, ist neben den Reflektoren 5, 9, 10 bloß ein weiterer Reflektor 6 für eine Temperaturmessung sowie für eine Kompensation der Temperaturabhängigkeit der Druckmessung erforderlich. Schließlich sind zwei weitere Reflektoren 7, 8 vorgesehen, welche der Identifikation des Substrates 2 dienen. Diese Reflektoren 7, 8 sind insbesondere dann erforderlich, wenn in einem Produktionsprozess eine Vielzahl von Sensoranordnungen 1 parallel eingesetzt wird und die einzelnen Sensoranordnungen 1 individuell erkannt werden müssen.

Mit einer erfindungsgemäßen Sensoranordnung 1 können unter realen Bedingungen Drücke und Temperaturen von zumindest bis zu 200 °C gemessen werden. Dabei werden hohe Drucksensitivitäten erreicht, die auch bei höheren Temperaturen nur geringfügig abfallen. Insbesondere bis in den Temperaturbereich von etwa 100 °C wird keine Abnahme der Drucksensitivität festgestellt. Darüber hinaus ist auch bei hohen Temperaturen von bis zu 200 °C eine Temperaturmessung mit einer Genauigkeit von ±2 °C möglich.

In Fig. 6 ist eine besonders kostengünstige und stabile Sensoranordnung 1 dargestellt, welche grundsätzlich analog wie die in Fig. 1 dargestellte Sensoranordnung 1 aufgebaut ist und auch wie zuvor erläutert arbeitet. Im Unterschied zu der in Fig. 1 dargestellten Variante sind jedoch die oberen Anlagen 11 sowie die untere Anlage 12 jeweils integral mit den Membranen 13, 14 ausgebildet. Dies bringt den Vorteil, dass nicht nur weniger Bauteile erforderlich sind, sondern diese auch mit hoher Präzision und ohne nachfolgenden Justieraufwand hergestellt werden können.

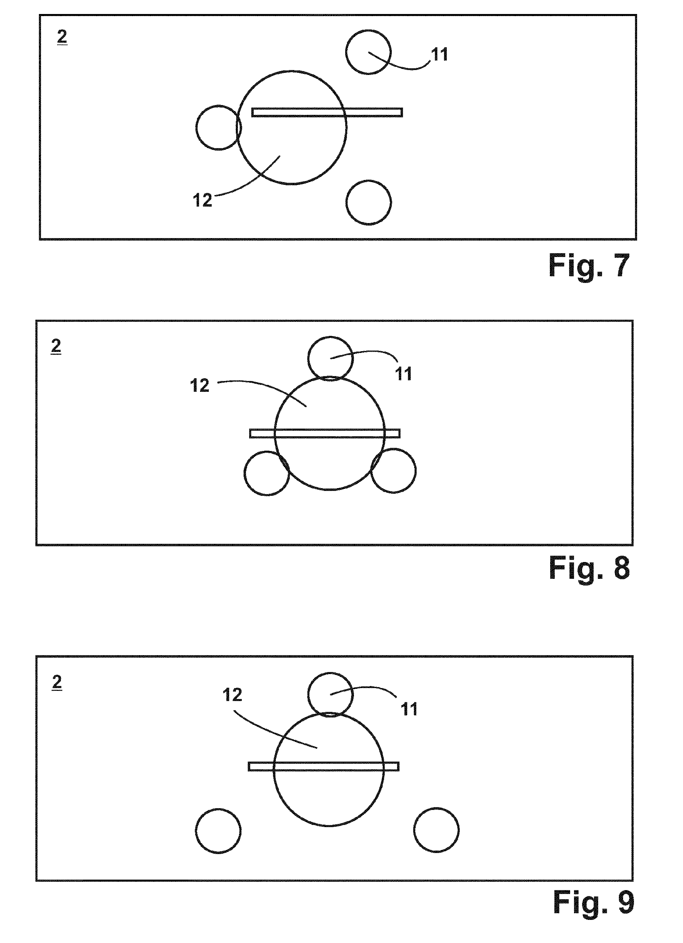

In einer speziellen Ausführungsvariante kann auch vorgesehen sein, dass die als Kugeln oder gegebenenfalls Kugelsegmente ausgebildeten oberen Anlagen 11 um 90° gegenüber der in Fig. 1 bzw. 2 dargestellten Variante gedreht sind. Für die durch die Auflager induzierten Spannungen lässt sich dadurch eine Position finden, in welcher die Spur bzw. die Reflektoren 5, 6, 7, 8, 9, 10 entlang der y-Achse so positioniert werden können, dass die Messsignale deutlich unabhängiger von den Spannungen und damit von der exakten Positionierung des Substrates 2 sind. Während gemäß Fig. 3 bzw. 4 eine geringfügige Verschiebung des Substrates 2 aufgrund des steilen Abfalles der Flanke vom Maximum zu einer großen Änderung des Messsignales führt, ist dies bei einer um 90° verdrehten Anordnung, nicht mehr gegeben. Entsprechende Anordnungen sind in Fig. 7 bis 9 dargestellt, wobei eine Anordnung nach Fig. 7 jener in Fig. 1 bzw. 2 entspricht. Während bei der Anordnung gemäß Fig. 7 Spannungsverläufe gemäß Fig. 3 bzw. 4 gegeben sind, sind bei einer um 90° gedrehten Anordnung der oberen Anlagen 11 die Spannungsdifferenzen bei einer Verschiebung des Substrates 2 um 20 µm kleiner als 1 %. Das Substrat lässt sich somit relativ leicht bzw. ohne großen Aufwand positionieren, da eine geringfügig geänderte Positionierung keine signifikanten Auswirkungen auf das Messergebnis hat. Dies gilt auch, wenn die Spur wie in Fig. 8 und 9 mittig angeordnet ist. Die Anordnung nach Fig. 9 mit im Vergleich zu Fig. 8 unterschiedlichen Abständen zwischen einzelnen der oberen Anlagen 11 hat zudem den Vorteil, dass im ersten Bereich, in dem sich auch die beiden ersten Reflektoren 5, 6 befinden, keine negativen Spannungen vorliegen.

Bei der Herstellung einer erfindungsgemäßen Sensoranordnung 1 kann wie folgt vorgegangen werden: Zunächst wird ein Kristall aus LiNbO₃ gezogen und aus diesem Kristall ein dünnes Plättchen in einer vorgegebenen kristallografischen Richtung geschnitten. Nach Polieren des Plättchens wird ein Lack bzw. Fotoresist aufgebracht, der mit einem Negativ jenes Musters belichtet wird, das den Oberflächenstrukturen 3 in Fig. 5 entspricht. Die für die Identifikation erforderlichen Strukturen werden durch einen sogenannten Stepper-Prozess gesondert eingebracht. Anschließend erfolgt eine Entwicklung des Fotoresists und danach eine Bedampfung zur Ausbildung der Oberflächenstrukturen 3 aus einem geeigneten Material, insbesondere einem Metall. Schließlich werden die Lackreste entfernt, um das funktionstüchtige Substrat 2 samt Oberflächenstrukturen 3 zu erhalten. Die Auflager samt den Membranen 13, 14 werden wie erwähnt bevorzugt integral gebildet, wobei die entsprechenden Strukturen durch Erodieren aus einem Stahlhalbzeug hergestellt werden können. Zum Zusammenbau der Sensoranordnung 1 ist es dann noch erforderlich, die sogenannten Bonds durch Reibschweißen anzubringen und über eine Glasführung aus dem später gasdicht verschlossenen inneren Teil der Sensoranordnung 1 herauszuführen und mit der Antenne 16 zu verbinden. Nach hermetischer Abriegelung des inneren Teils der Sensoranordnung 1, welcher das Substrat 2 umfasst, können die übrigen Teile zusammengebaut werden.

## Patentansprüche

1. Sensoranordnung (1), mit der durch Funk zumindest eine Messgröße messbar ist, umfassend ein Substrat (2) mit darauf angebrachten Oberflächenstrukturen (3), wobei die Oberflächenstrukturen (3) zumindest eine Einkoppeleinheit (4) zur Generierung einer Oberflächenwelle im bzw. am Substrat (2) durch Einkoppeln eines Funksignals und Umwandlung in eine Oberflächenwelle sowie zumindest einen Reflektor (5, 6, 7, 8, 9, 10) aufweisen, welcher die Oberflächenwelle zur Einkoppeleinheit (4) reflektiert, **dadurch gekennzeichnet, dass** das Substrat (2) zwischen mehreren Anlagen (11, 12) mit punktförmigen Anlagebereichen gelagert ist.

2. Sensoranordnung (1) nach Anspruch 1, **dadurch gekennzeichnet, dass** das Substrat (2) aus einem piezoelektrischen Kristall gebildet ist.

3. Sensoranordnung (1) nach Anspruch 2, **dadurch gekennzeichnet, dass** das Substrat (2) aus Lithiumniobat gebildet ist.

4. Sensoranordnung (1) nach einem der Ansprüche 1 bis 3, **dadurch gekennzeichnet, dass** die Einkoppeleinheit (4) ein Interdigitalwandler ist, der kammartig ineinander eingreifende Strukturen umfasst.

5. Sensoranordnung (1) nach einem der Ansprüche 1 bis 4, **dadurch gekennzeichnet, dass** mehrere Reflektoren (5, 6, 7, 8, 9, 10) zur Messung von Temperatur und/oder Druck und/oder zur Identifikation der Sensoranordnung (1) vorgesehen sind.

6. Sensoranordnung (1) nach Anspruch 5, **dadurch gekennzeichnet, dass** drei Reflektoren (5, 9, 10) zur Messung des Druckes vorgesehen sind.

7. Sensoranordnung (1) nach Anspruch 6, **dadurch gekennzeichnet, dass** die drei Reflektoren (5, 9, 10) gleich weit voneinander beabstandet sind.

8. Sensoranordnung (1) nach einem der Ansprüche 5 bis 7, **dadurch gekennzeichnet, dass** ein weiterer Reflektor (6) zur Messung der Temperatur vorgesehen ist, wobei dieser Reflektor (6) zwischen den beiden von der Einkoppeleinheit (4) am weitesten entfernten Reflektoren (5, 9) zur Messung des Druckes angeordnet ist.

9. Sensoranordnung (1) nach einem der Ansprüche 5 bis 8, **dadurch gekennzeichnet, dass** die Einkoppeleinheit (4) und die Reflektoren (5, 6, 7, 8, 9, 10) auf einer Geraden angeordnet sind.

10. Sensoranordnung (1) nach einem der Ansprüche 1 bis 9, **dadurch gekennzeichnet, dass** zumindest eine Membran (13, 14) vorgesehen ist, die mit zumindest einer Anlage (11, 12) mittelbar in Verbindung steht oder mit dieser integral verbunden ist.

11. Sensoranordnung (1) nach einem der Ansprüche 1 bis 10, **dadurch gekennzeichnet, dass** zumindest einzelne, vorzugsweise alle der punktförmigen Anlagen (11, 12) an den Anlagebereichen am Substrat (2) als Kugelsegmente ausgebildet sind.

12. Sensoranordnung (1) nach Anspruch 11, **dadurch gekennzeichnet, dass** die Anlagen (11, 12) drei erste Kugelsegmente und ein weiteres zweites Kugelsegment umfassen, wobei das Substrat (2) zwischen den ersten Kugelsegmenten und dem zweiten Kugelsegment gelagert ist.

13. Sensoranordnung (1) nach Anspruch 11 oder 12, **dadurch gekennzeichnet, dass** die ersten Kugelsegmente und/oder das zweite Kugelsegment auf einer Membran (13, 14) angeordnet sind.

14. Sensoranordnung (1) nach Anspruch 13, **dadurch gekennzeichnet, dass** die ersten Kugelsegmente und/oder das zweite Kugelsegment mit der Membran (13, 14) integral ausgebildet ist.

15. Sensoranordnung (1) nach einem der Ansprüche 1 bis 14, **dadurch gekennzeichnet, dass** die Anlagen (11, 12) aus Stahl gebildet sind.
